# EUROPEAN PATENT SPECIFICATION

(11) **EP 2 127 954 B1**
(45) Date of publication and mention of the grant of the patent: **02.05.2012**
(21) Application number: 08251822.6
(22) Date of filing: 27.05.2008
(51) Int. Cl.: B60J 5/04, B60R 21/23, B60R 19/00, B60J 5/10

(54) **A motor vehicle safety device**
Kraftfahrzeugsicherheitsvorrichtung
Dispositif de sécurité de véhicule à moteur

(43) Date of publication of application: 02.12.2009
(73) Proprietor: Autoliv Development AB, 447 83 Vårgårda (SE)
(72) Inventor: Dubois, David, 60000 Goincourt (FR); Evrat, Nicolas, 76000 Rouen (FR)
(74) Representative: Parry, Simon James

(56) References cited:
- WO-A-02/072392
- DE-A1- 10 154 026
- DE-A1- 19 918 158
- DE-A1-102006 023 922
- DE-U1- 20 320 873
- GB-A- 2 354 980
- US-A- 5 845 937

## Description

The present invention relates to a motor vehicle safety device and, more particularly, relates to a safety device for maintaining a clearance between adjacent structural members of a motor vehicle in the event of a crash.

The doors of motor vehicles are conventionally mounted using a combination of hinges and releasable latches in order to provide opening doors which can be securely closed during operation of a motor vehicle and locked shut when the motor vehicle is not in use. However, an important secondary function of such door hinges and latches is to ensure sufficient integrity of the complete motor vehicle structure in the event that the motor vehicle should be involved in a crash. It is a goal of vehicle manufacturers to seek to reduce intrusion of the structure of the motor vehicle into the interior cabin as a result of an accident, and also to retain the shape of the vehicle's safety cage. The doors of a motor vehicle play an important function in contributing to vehicle strength and, indeed, are designed to allow dissipation of some of the collision energy in a motor vehicle structure, through the inner and outer door structure. Crash energy is transmitted to the doors of a motor vehicle through the door hinges and latches, but due to necessary assembly clearances arising from their primary function, the level of such energy transmission is typically relatively low.

As will also be appreciated, a problem with known door structures of the general type described above, is that after a severe accident, the door hinges and/or latches can become deformed to such a degree that the door can no longer be easily opened which can have serious implications in the event that access is required to the interior cabin by emergency services in order to tend to an occupant of a crashed vehicle.

GB2354980A discloses a vehicle with an inflatable device in front of the engine such that the inflatable device becomes inflated so as to transfer loads from the engine to a cross-member extending in front of the engine, by reducing forward movement of the engine relative to the structure of the motor vehicle.

DE102006023922A1 discloses a side impact protection device for a motor vehicle which is configured to move the vehicle door outwardly before and/or during a side impact.

WO02/072392A1 discloses a safety arrangement for a motor vehicle which is configured to raise part of the hood or bonnet of the motor vehicle in the event of an accident situation, via inflation of an inflatable element, in order to space the hood or bonnet further from the engine block located therebelow.

It is therefore an object of the present invention to provide a safety device which seeks to address the above mentioned problems.

Accordingly, the present invention provides a safety device for maintaining a clearance between adjacent structural members of a motor vehicle in the event of a crash, the device being characterized by the provision of an inflatable element mounted to one of a pair of substantially adjacent structural members of a motor vehicle, the inflatable element being configured for inflation within a space initially formed between said pair of structural members, wherein the inflatable element is provided with a vent aperture, the vent aperture being arranged to close against one of the structural members during inflation.

Preferably the inflatable element has a pre-crashed configuration in which is does not intrude in to said space.

Advantageously said inflatable element is configured to couple said structural members to one another when inflated and to prevent substantially complete closure of the space between them in the event of a crash.

Conveniently one of said structural members is moveable in order to provide access to an interior space of the motor vehicle, and the other of said structural members is fixed.

Advantageously said inflatable element is mounted to the fixed member.

Conveniently said moveable member is a door and said fixed member is a pillar.

Alternatively said moveable member is a bonnet (sometimes also known as a hood) or a boot-lid (also sometimes known as a trunk-lid).

Preferably said inflatable element is provided in the region of a releasable latch between the moveable member and the fixed member.

Advantageously the inflatable element is provided in the region of a hinge between the moveable member and the fixed member.

Preferably the inflatable elements take the form of an air-bag formed of a substantially elastically deformable material.

Alternatively, the inflatable element is an air-bag formed of a substantially plastically deformable material.

Preferably the inflatable element has an inflating capacity of between 50 cm³ and 200 cm³.

Advantageously, the inflatable element is elongate in form.

Preferably the safety device further comprises a pyrotechnic gas-generator provided in fluid-communication with the inflatable element for inflation thereof.

It has been found that the safety device of the present invention addresses the aforementioned problems associated with more conventional closing door arrangements by effectively filling up the space initially located between the two structural members (most preferably a door and structural pillar), thereby coupling the two structural members to one another. The arrangement has been found not only to prevent significant deformation of the door hinges and latch arrangements, but also to provide for improved energy dissipation between the two structural members.

So that the invention may be more readily understood, and so that further features thereof may be appreciated, embodiments of the invention will now be described, by way of example, with reference to the accompanying drawings, in which:
Figure 1 is a schematic side view illustrating a generally conventional motor vehicle door-mounting.
Figure 2 is a view corresponding generally to that of Figure 1, illustrating a safety device in accordance with the present invention comprising a pair of inflatable elements;
Figure 2A is an enlarged sectional view illustrating one of the inflatable elements in its initial, uninflated, position between a structural pillar of the motor vehicle and the door;
Figure 3 is a view corresponding generally to that of Figure 2 illustrating the safety device after actuation;
Figure 3A is a view corresponding generally to that of Figure 2A, but illustrating the inflatable element in an inflated condition;
Figure 4 is a schematic perspective view illustrating the preferred inflated dimensions of an inflatable element for use in accordance with the present invention;
Figure 5a is a schematic perspective view showing a preferred folded configuration for the inflatable element, prior to actuation;
Figure 5b is a view corresponding generally to that of Figure 5a, but illustrating the inflatable element in its inflated condition;
Figures 6a, 6b and 6c illustrate alternative ways in which an inflatable element can be mounted within the door jamb of a motor vehicle for use in accordance with the present invention;
Figures 7a and 7b are views corresponding generally to those of figures 6a to 6c illustrating two alternative ways in which an inflator can be mounted with respect to the inflatable element;
Figure 8a is a schematic view illustrating an inflatable element in its initial, uninflated, position within a door jamb;
Figure 8b is a view corresponding generally to that of

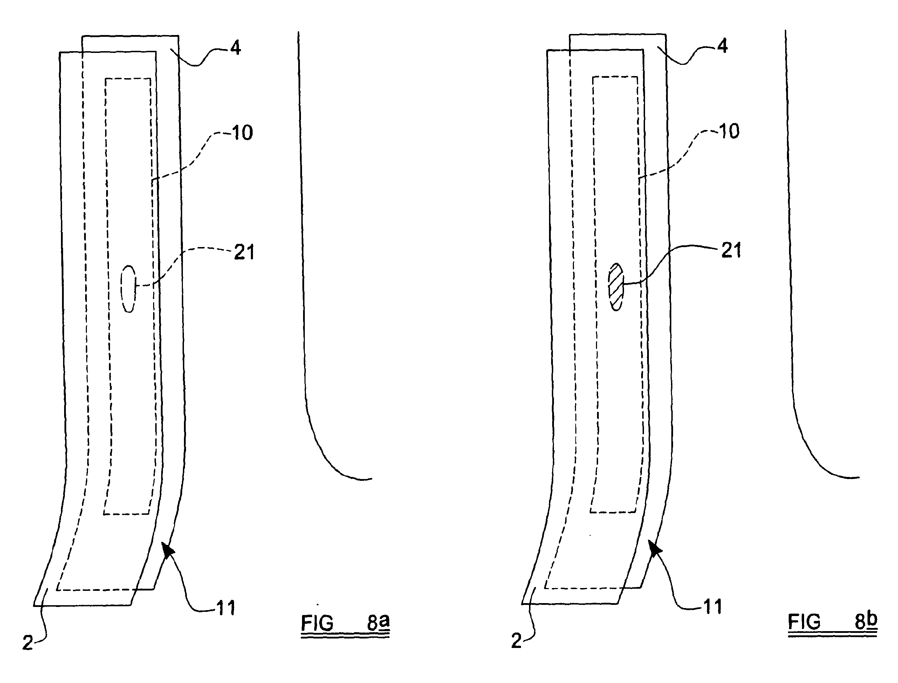

Figure 8a, but illustrating the inflatable element in a substantially fully inflated condition in which a vent aperture provided within the inflatable element is pressed against the door structure;

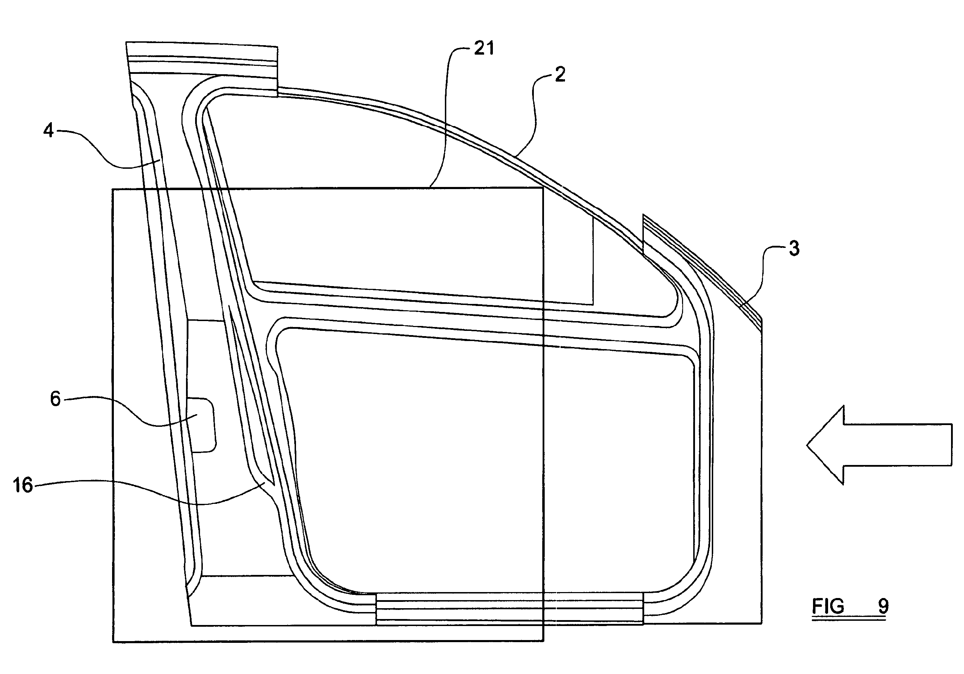

Figure 9 is a view illustrating a closed vehicle door extending between an A-pillar and a B-pillar of a motor vehicle structure, viewed from the inside of the motor vehicle cabin;

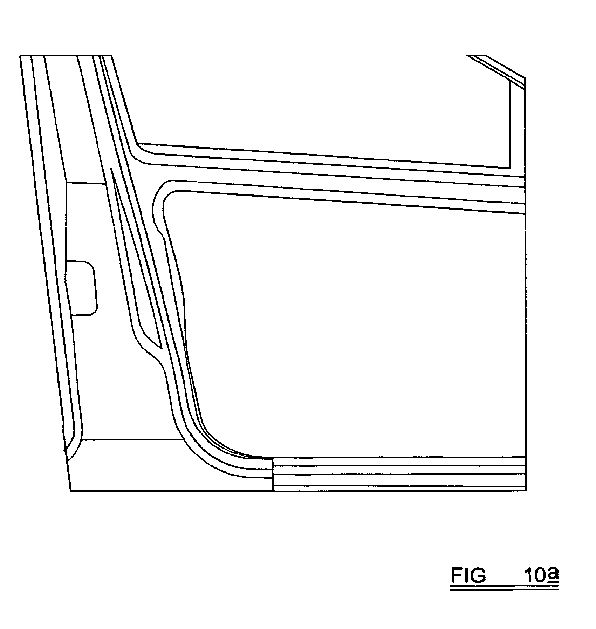

Figure 10a is an enlarged view of the arrangement shown in Figure 9, focusing on the region of the B-pillar and the rear part of the door structure;

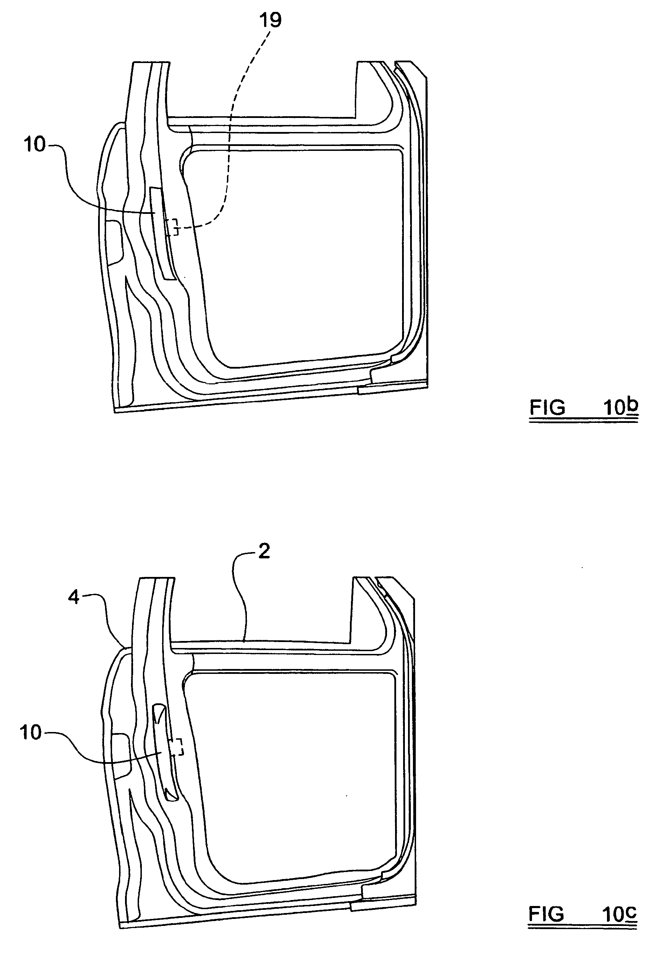

Figure 10b is a perspective view, corresponding generally to that of figure 10a but from a more rearward viewpoint, illustrating the arrangement after inflation of the inflatable element;
Figure 10c is a view corresponding generally to that of figure 10b, but illustrating the arrangement following deformation of the vehicle structure and the door in a crash-situation;

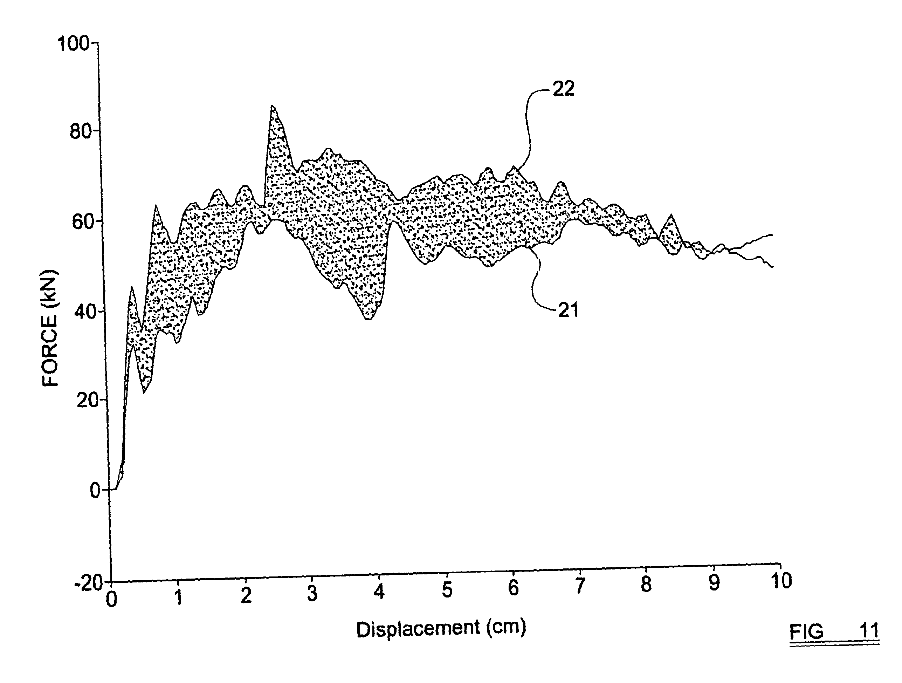

Figure 11 is a graph showing the improved energy dissipation characteristic of a vehicle provided with a safety device in accordance with the present invention.

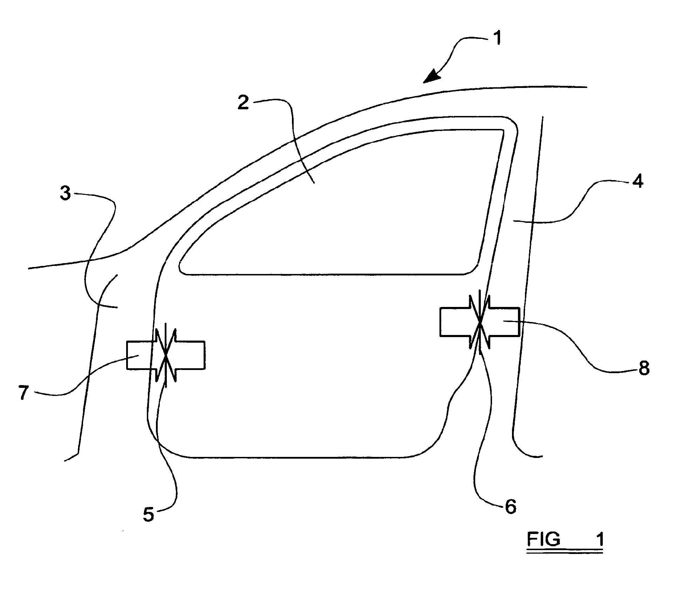

Referring initially to Figure 1, part of the structure of a motor vehicle 1 is illustrated showing a door 2 in a closed position between a structural A-pillar 3 and a structural B-pillar 4 of the motor vehicle. The door is pivotally mounted to the A-pillar 3 by a hinge 5, and is releasably connected to the B-pillar 4 by a releasable latch 6. The hinge 5 and latch 6 are only illustrated schematically.

In the event that a motor vehicle 1 having a generally conventional door structure such as that illustrated in Figure 1 is involved in a crash, the collision forces are transmitted between the A-pillar 3 and the door 2 in the region of the hinge 5 as illustrated schematically by the arrows 7, and between the B-pillar 4 and the door structure 2 in the region of the latch 6 as illustrated schematically by the arrows 8. As will be appreciated, this means that the collision forces are transmitted across a relatively small region and also can only be transmitted in this manner when the manufacturing tolerances of the hinge and latch arrangements have taken up an initial degree of deflection without any dissipation of energy.

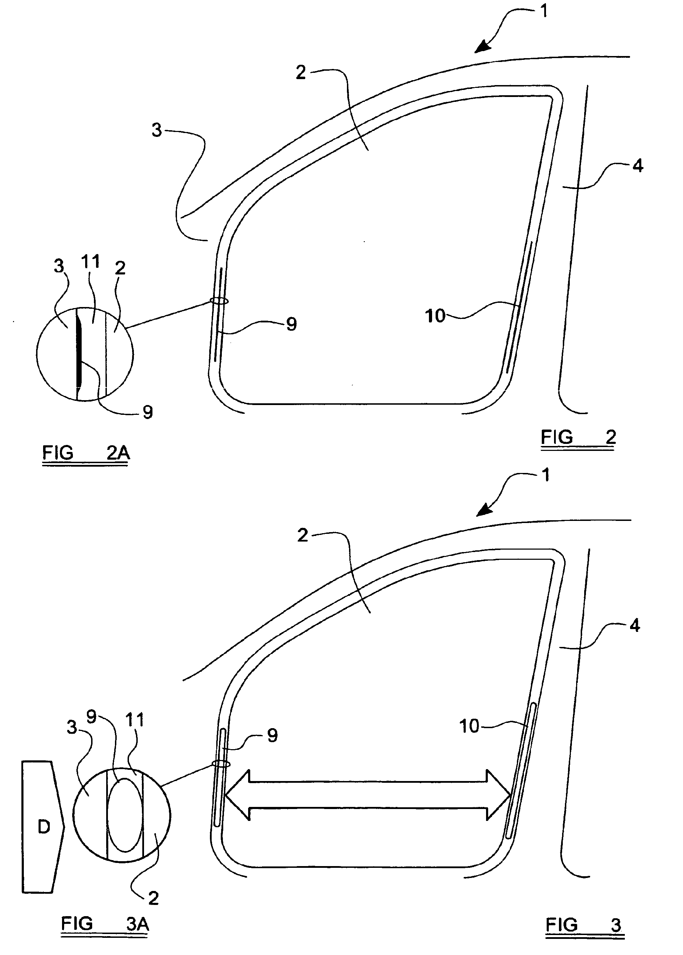

Figure 2 is a view corresponding generally to that of Figure 1, but illustrates the motor vehicle 1 fitted with a safety device in accordance with the present invention, with the hinge 5 and the latch 6 having been omitted for the sake of clarity. A pair of inflatable elements 9, 10 are provided which preferably take the form of inflatable air-bags which are initially provided in a tightly packed configuration. The two inflatable elements are each provided within the respective space formed between the door 2 and the two pillars, 3, 4, that is within the door jambs.

Each of the inflatable elements 9, 10 have an initial configuration such as that illustrated schematically in Figure 2a with regard to the front element 9 between the A-pillar and the door 2. The inflatable element 9 is shown in an initial uninflatated condition in which it is mounted to the A-pillar and in which it is tightly packed so as not to intrude significantly in to the space 11 formed between the A-pillar 3 and the door 2. The rear inflatable element 10 has a similar configuration in its initial condition.

Upon actuation of the safety device, for example upon receipt of a signal from a crash sensor or a predictive "pre-crash" sensor, the inflatable elements 9, 10 are inflated so as to adopt configurations such as that illustrated schematically in Figure 3a with regard to the front inflatable element 9. It will thus be appreciated that when the safety device is actuated, the inflatable elements 9, 10 are inflated so as to substantially fill the space 11 between the door 2 and the adjacent pillar 3 (or 4), or at least so as to extend substantially completely across the space 11, thereby effectively coupling the door with the adjacent pillar. When the inflatable elements 9, 10 are inflated in this manner, a deformation force applied, for example, from the front of the motor vehicle will be transmitted from the A-pillar 3, via the front inflatable element 9 to the structure of the door 2, from where it will then be transmitted through the structure of the door and on to the B-pillar 4 via the rear inflatable element 10. As will also be appreciated, with the two inflatable elements 9, 10 inflated within the space 11 at the front and rear of the door, substantial deformation of the hinge and the latch will be prevented, thereby ensuring relatively easy opening of the door after a crash.

Whilst the invention has been described in general terms with regard to figures 2 and 3 in terms of an embodiment incorporating two inflatable elements (one located at the front of a door and one located to the rear of a door), it should be appreciated that alternative embodiments of the invention could comprise only one inflatable element located either at the front of the door in the region of the hinge, or at the rear of the door in the region of the latch.

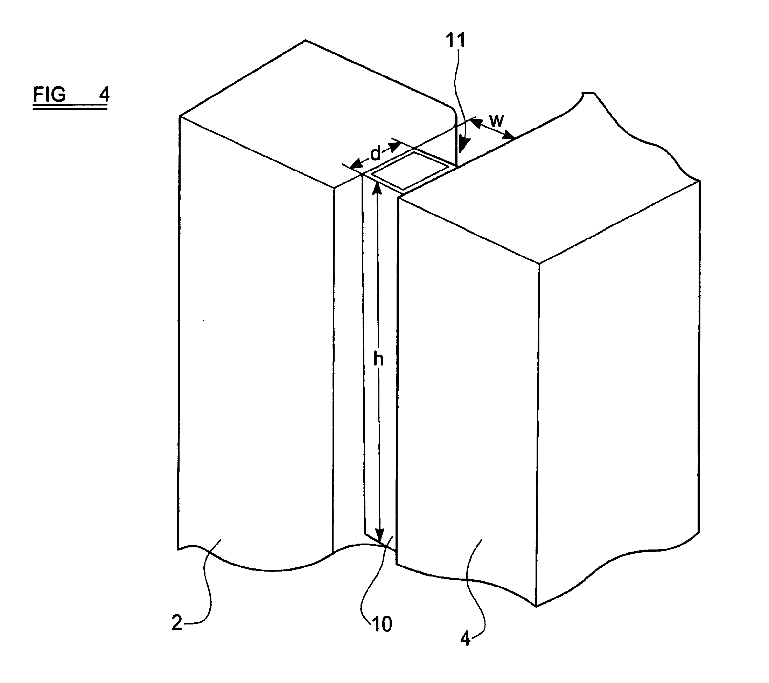

Figure 4 is a schematic illustration showing the preferred dimensions for an inflatable element 9, 10 of the type described above for installation in a conventional motor vehicle. The inflatable element illustrated is the rear inflatable element 10 of the arrangement shown in Figures 2 and 3 and so is located in the space 11 formed between the door 2 and the B-pillar 4 of the motor vehicle. The inflatable element 10 is shown in its inflated condition within the space 11 and it will be seen that the inflatable element has a generally elongate configuration having a vertical height (h) which is significantly greater than a transverse depth (d) and a longitudinal width (w). For installation in conventional motor vehicles, the preferred inflatable element 10 has a height (h) of 0.3 metres, a depth (d) of 0.03 metres and a width (w) of 0.01 metres giving an inflatable volume of approximately 90 cm³. However, it is envisaged that variants of the invention could incorporate inflatable elements having an inflatable volume of between 50 and 200 cm³, and more preferably 80 and 100 cm³. As will be appreciated, large vehicles such as SUVs are likely to require larger volume inflatable elements than smaller vehicles such as city cars.

It will be appreciated by those of skill in the art of motor vehicle safety devices incorporating inflatable air-bags that the above-prescribed air-bag is rather small both in terms of overall inflated dimension, and also in terms of its internal inflatable volume. Such a small inflatable element is necessary in order for it to be accommodated in the region of the small space 11 between the motor vehicle door and the adjacent structural pillar of the motor vehicle and so in order to provide sufficiently quick inflation of the inflatable element 10, it is proposed to provide the element in fluid communication with a pyrotechnic gas generator configured to receive an actuating signal from a crash sensor or a pre-crash sensor and to direct an appropriate volume of inflating gas very quickly in to the internal volume of the inflatable element 10. In preferred arrangements, the inflatable elements must become substantially fully inflated within 15 milliseconds of receipt of an appropriate actuating signal from the sensor, and an internal inflation pressure of approximately 100bar has been found to be particularly advantageous. This level of pressure, in an air-bag of the preferred dimensions indicated above, has been found to transmit a load of approximately 90kN between the door and the pillar.

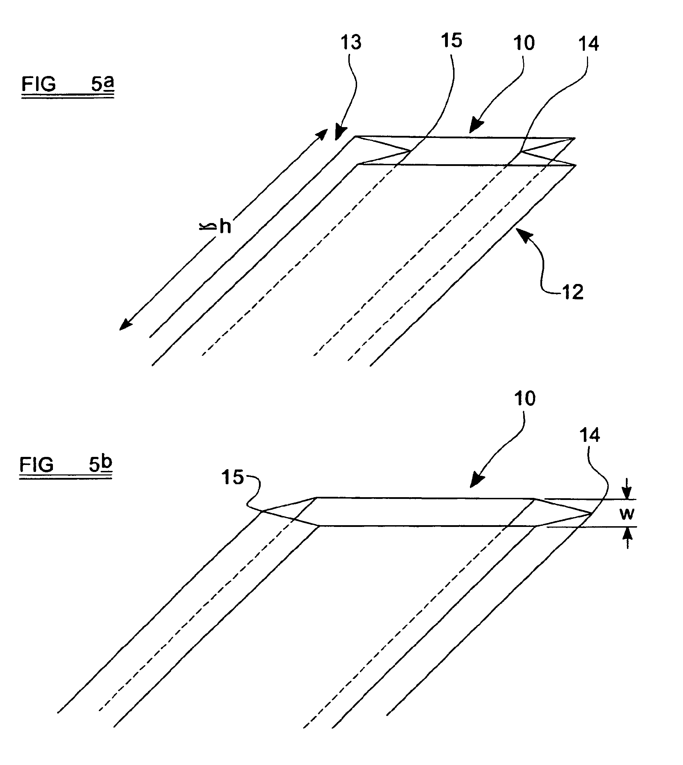

Turning now to consider figure 5a, there is illustrated a preferred fold configuration for the initially tightly packed inflatable elements 9, 10. As can be seen, the elongate inflatable element 10 is initially zig-zag folded in the region of its longitudinal side edges 12, 13 so as to have re-entrant side regions running longitudinally. It should be appreciated, however, that figure 5a illustrates the folded inflatable element in a slightly opened or pulled-apart configuration for ease of illustration. When the inflatable element is initially properly packed, the re-entrant regions 14, 15 will be tightly received between the two opposing side faces of the inflatable element 10.

Figure 5b illustrates the inflatable element 10 of figure 5a in a position generally representative of its inflated configuration from which it will be appreciated that during inflation of the elements 10, the initial re-entrant regions 14, 15 are blown outwardly so as to adopt the positions illustrated in figure 5b. It should therefore be appreciated that the preferred form of inflatable element 10 has an initial "bellows"-type shape which has the effect that during the initial stages of inflation, the element 10 quickly gains an increased width (w) and so quickly couples between the door structure and the adjacent pillar structure of the motor vehicle.

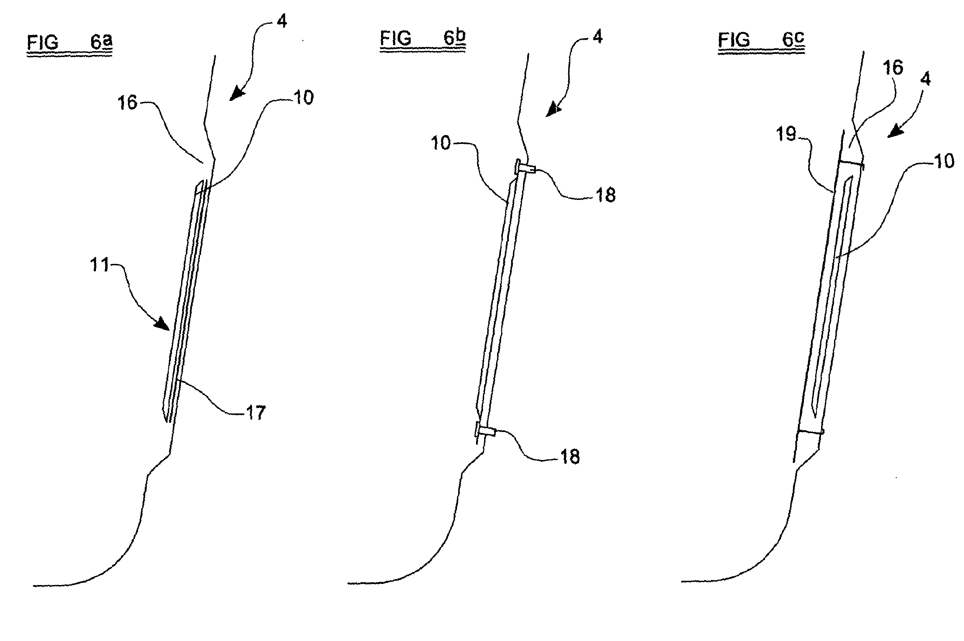

As will be appreciated, the space 11 between the structure of the door and the adjacent pillars is very limited in size and so, as shown in figure 6a, 6b and 6c, the initially tightly packed inflatable element 10 is preferably mounted to the pillars 3, 4 so as to be received within a shallow recess 16 formed along the pillar and in communication with the space 11. The tightly packed inflatable element 10 (which can initially be retained within a rupturable protective wrapper) can be mounted within the recess 16 in any one of a number of ways. For example, figure 6a illustrates the inflatable element 10 being glued to the pillar 4, within the recess 16, by a layer of suitable adhesive 17. Alternatively, as illustrated in figure 6b, the packaged inflatable element 10 can be secured to the pillar 4 by a number of bolts 18, or rivets or the like which are received through appropriate mounting apertures provided through the surface of the pillar 4. Figure 6c illustrates an alternative mounting arrangement in which the packaged inflatable element 10 is retained behind a rupturable tear-cover 19 which is secured to the pillar 4 so as to substantially cover the recess 16.

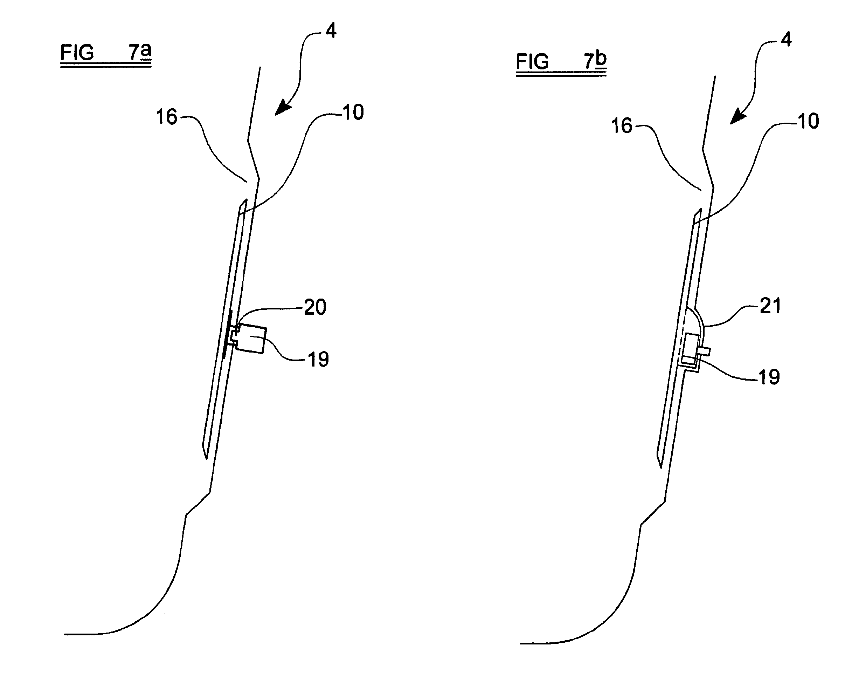

As indicated above, the inflatable element 10 is provided with an inflator which preferably takes the form of a small pyrotechnic gas generator. Figure 7a illustrates an arrangement in which the gas generator 19 is mounted within the structural pillar 4 of the motor vehicle, behind the recess 16, the gas generator 19 having an outlet portion 20 which extends through an aperture formed in the surface of the pillar 4 so as to communicate fluidly with the inflatable element 10. An alternative configuration is illustrated in figure 7b in which a small inflator recess 21 is provided in the structural pillar 4 and which opens into the shallow recess 16. The inflator recess 21 receives the gas generator 19 for fluid communication with the inflatable element 10.

As will be appreciated, as one of the main functions of the invention is to ensure that the doors of a motor vehicle can be opened relatively easily after an accident, it is preferable for each inflatable element 9, 10 to be configured for immediate deflation after the accident has occurred. This is achieved by providing each inflatable element with at least one vent aperture 21 such as that illustrated schematically in figure 8a. Figure 8a illustrates, in perspective view, the inflatable element 10 in an initial, substantially uninflated, condition within the space 11 between the structure of a door 2 and the B-pillar 4 of a motor vehicle. The vent aperture 21 takes the form of an elongate oval hole provided in the inflatable element 10 so as to be directed towards the structure of the door 2. However, in preferred embodiments, it is envisaged that the vent hole 21 will initially be obscured due to the initial folded configuration of the inflatable element 10 so as to allow very quick initial inflation of the element without significant escape of inflating gas through the vent hole 21.

Figure 8b illustrates the arrangement of figure 8a in a condition in which the inflatable element 10 is substantially fully inflated, thereby extending entirely across the gap 11 so as to couple the door 2 to the adjacent pillar 4. Here, it can be seen that the region of the inflatable element 10 within which the vent hole 21 is provided has been pressed against the rear surface of the door structure 2. In this way, the vent aperture 21 becomes effectively closed against the structure of the door 2, thereby preventing the outflow of inflating gas through the aperture 21 during later stages of the inflating process. However, the vent aperture 21 becomes unobstructed once pressurisation by the inflating gas has stopped and once there are no more crash forces acting on the motor vehicle. This is because whilst the vehicle frame and door is compressed in a crash, the space 11 between the door 2 and the pillar 4 is reduced slightly. However, after the crash, a degree of relaxation occurs within the structure of the motor vehicle frame and the door, with the result that the gap 11 relaxes slightly upon completion of the accident, thereby moving the surface of the door 2 slightly away from the vent aperture 21, and allowing the inflating gas within the element 10 to vent through the aperture 21. This causes the inflatable element 10 to deflate slightly, thereby allowing the door to be opened immediately after the vehicle comes to a rest.

Figure 9 illustrates the general structure of a motor vehicle A-pillar 3, door 2 and B-pillar 4, viewed from the interior of the motor vehicle. The recess 16 within which the inflatable element 10 is provided can clearly be seen to be formed generally in the region of the door latch mechanism 6. For the sake of simplicity, a front inflatable element 9 is not illustrated in figure 9.

Figure 10a represents an enlarged view of the region of figure 9 identified by the square 21 with a mesh notation added so that the subsequent deformation forces can be seen more easily. Figure 10a illustrates the arrangement before actuation.

Figure 10b corresponds generally to figure 10a, but is illustrated from a slightly more rearward view point, and illustrates the arrangement during an initial stage of actuation in which the gas generator 19 has been fired in order to inflate the inflatable element 10. Figure 10c shows the inflatable element 10 in a substantially fully inflated condition in which it couples the B-pillar 4 to the structure of the door 2, and also shows the structure of the motor vehicle in a deformed condition due to crash forces.

Preferred embodiments of the invention incorporate inflatable elements 10 in the form of air-bags made of elastically deformable material such as reinforced textile material or an elastomeric material. The preferred shapes for such inflatable air-bags include elongate cylinders having a substantially circular cross-section, elongate frustoconical arrangements or elongate air-bag configurations having a substantially rectangular cross-section. However, it should be appreciated that variants of the invention are also envisaged which might incorporate plastically deformable air-bags made from materials such as plastic or metal.

It has been found that with the safety device of the present invention installed in a generally otherwise conventional motor vehicle, energy dissipation across a door aperture is significantly improved. This can be seen from a consideration of figure 11 which represents a plot of force against displacement. The lower line 21 represents the energy dissipation characteristic of a motor vehicle without the safety device of the present invention, whereas line 22 illustrates the energy dissipation characteristic of a similar vehicle with a device in accordance with the present invention installed. As can be seen, the vehicle incorporating the safety device of the present invention displays a significantly improved energy dissipation characteristic across a significant range of displacement.

Of course, as will readily be appreciated by those of skill in this technical field, although the present invention has been described with particular reference to certain embodiments, it is envisaged that various modifications or alterations could be made without departing from the scope of the presently claimed invention. For example, although the invention has been described above with reference to particular embodiments in which inflatable elements are provided between a structural pillar of a motor vehicle and an adjacent moveable door panel, the invention could also be installed in the space between a structural roof rail or door-sill of a motor vehicle and an associated moveable door panel in order to provide improved energy dissipation in a rollover accident and also to allow easy door opening in the event of a rollover accident. Furthermore, the inflatable elements of the present invention could also be installed between a bonnet or boot-lid of a motor vehicle and the adjacent structural parts of a motor vehicle.

When using a specification and claims, the terms "comprises" and "comprising" and variations thereof mean that the specified features, steps or integers are included. The terms are not to be interpreted to exclude the presence of other features, steps or components.

The features disclosing the foregoing description, or in the following claims, or in the accompanying drawings, expressed in their specific forms are in terms of a means for performing the disclosed function, or a method or process for obtaining a disclosed result, as appropriate, may, separately, or in any combination of such features, be utilised for realising an invention in diverse forms thereof.

## Claims

1. A safety device for maintaining a clearance between adjacent structural members (2,4) of a motor vehicle in the event of a crash, the device being **characterized by** the provision of an inflatable element (10) mounted to one (4) of a pair (2,4) of substantially adjacent structural members of a motor vehicle, the inflatable element (10) being configured for inflation within a space (11) initially formed between said pair of structural members (2,4),wherein the inflatable element (10) is provided with a vent aperture (21), the vent aperture (21) being arranged to close against one of the structural members (2) during inflation.

2. A safety device according to claim 1 wherein said inflatable element (10) has a pre-crash configuration in which it does not intrude in to said space (11).

3. A safety device according to claim 1 or claim 2, wherein said inflatable element (10) is configured to couple said structural members (14) to one another when inflated and to prevent substantially complete closure of the space (11) between them in the event of a crash.

4. A safety device according to any preceding claim, wherein one of said structural members (2) is moveable in order to provide access to an interior space of the motor vehicle, and the other of said structural members (4) is fixed.

5. A safety device according to claim 4, wherein said inflatable element (10) is mounted to the fixed member (4).

6. A safety device according to claim 4 or claim 5, wherein said moveable member is a door (2) and said fixed member is a pillar (4).

7. A safety device according to claim 4 or claim 5, wherein said moveable member (2) is a bonnet or boot-lid.

8. A safety device according to any one of claims 4 to 7, wherein said inflatable element (10) is provided in the region of a releasable latch (6) between the moveable member (2) and the fixed member (4).

9. A safety device according to any one of claims 4 to 8, wherein said inflatable element (10) is provided in the region of a hinge (5) between the moveable member (2) and the fixed member (4).

10. A safety device according to any preceding claim, wherein said inflatable element (10) takes the form of an air-bag formed of a substantially elastically deformable material.

11. A safety device according to any one of claims 1 to 9, wherein said inflatable element (10) is an air-bag formed of a substantially plastically deformable material.

12. A safety device according to any preceding claim, wherein the inflatable element (10) has an inflating capacity of between 50 cm³ and 200 cm³.

13. A safety device according to any preceding claim, wherein the inflatable element (10) is elongate in form.

14. A safety device according to any preceding claim, further comprising a pyrotechnic gas-generator (19) provided in fluid-communication with the inflatable element (10) for inflation thereof.

## Patentansprüche

1. Sicherheitsvorrichtung zur Aufrechterhaltung eines Abstands zwischen benachbarten Bauelementen (2, 4) eines Kraftfahrzeugs bei einem Verkehrsunfall, wobei die Vorrichtung durch die Bereitstellung eines aufblasbaren Elements (10) **gekennzeichnet** ist, das an einem (4) von zwei (2, 4) im Wesentlichen benachbarten Bauelementen eines Kraftfahrzeugs angebracht ist, wobei das aufblasbare Element (10) ausgebildet ist, um innerhalb eines Raums (11) aufgeblasen zu werden, der zuvor zwischen den zwei Bauelementen (2, 4) ausgebildet wurde, wobei das aufblasbare Element (10) mit einer Entlüftungsöffnung (21) bereitgestellt ist, die angeordnet ist, um während des Aufblasvorgangs durch Anliegen an einem der Bauelemente (2) verschlossen zu sein.

2. Sicherheitsvorrichtung nach Anspruch 1, worin das aufblasbare Element (10) vor einem Verkehrsunfall eine Konfiguration aufweist, in der es nicht in den Raum (11) vorragt.

3. Sicherheitsvorrichtung nach Anspruch 1 oder 2, worin das aufblasbare Element (10) ausgebildet ist, um, wenn es aufgeblasen ist, die Bauelemente (2, 4) miteinander zu verbinden und bei einem Verkehrsunfall ein im Wesentlichen vollständiges Verschließen des Raums (11) zwischen diesen zu verhindern.

4. Sicherheitsvorrichtung nach einem der vorangegangenen Ansprüche, worin eines der Bauelemente (2) bewegbar ist, um Zugang zu einem Innenraum des Kraftfahrzeugs zu gewähren, und das andere der Bauelemente (4) feststehend angeordnet ist.

5. Sicherheitsvorrichtung nach Anspruch 4, worin das aufblasbare Element (10) an dem feststehenden Element (4) angebracht ist.

6. Sicherheitsvorrichtung nach Anspruch 4 oder 5, worin das bewegbare Element eine Tür (2) und das feststehende Element eine Säule (4) ist.

7. Sicherheitsvorrichtung nach Anspruch 4 oder 5, worin das bewegbare Element (2) eine Motorhaube oder ein Kofferraumdeckel ist.

8. Sicherheitsvorrichtung nach einem der Ansprüche 4 bis 7, worin das aufblasbare Element (10) in dem Bereich einer lösbaren Einschnappklinke (6) zwischen dem bewegbaren Element (2) und dem feststehenden Element (4) bereitgestellt ist.

9. Sicherheitsvorrichtung nach einem der Ansprüche 4 bis 8, worin das aufblasbare Element (10) in dem Bereich eines Scharniers (5) zwischen dem bewegbaren Element (2) und dem feststehenden Element (4) bereitgestellt ist.

10. Sicherheitsvorrichtung nach einem der vorangegangenen Ansprüche, worin das aufblasbare Element (10) die Form eines Airbags aus einem im Wesentlichen elastisch verformbaren Material hat.

11. Sicherheitsvorrichtung nach einem der Ansprüche 1 bis 9, worin das aufblasbare Element (10) ein Airbag aus einem im Wesentlichen plastisch verformbaren Material ist.

12. Sicherheitsvorrichtung nach einem der vorangegangenen Ansprüche, worin das aufblasbare Element (10) ein aufblasbares Volumen zwischen 50 cm³ und 200 cm³ aufweist.

13. Sicherheitsvorrichtung nach einem der vorangegangenen Ansprüche, worin das aufblasbare Element (10) eine längliche Form aufweist.

14. Sicherheitsvorrichtung nach einem der vorangegangenen Ansprüche, die ferner einen pyrotechnischen Gasgenerator (19) umfasst, der in Fluidkommunikation mit dem aufblasbaren Element (10) bereitgestellt ist, um dieses aufzublasen.

## Revendications

1. Dispositif de sécurité pour maintenir un jeu entre des éléments structurels adjacents (2, 4) d'un véhicule moteur dans l'éventualité d'un accident, le dispositif étant **caractérisé par** la réalisation d'un élément gonflable (10) monté sur un (4) d'une paire (2, 4) d'éléments structurels sensiblement adjacents d'un véhicule moteur, l'élément gonflable (10) étant configuré pour le gonflage dans un espace (11) initialement formé entre ladite paire d'éléments structurels (2, 4), où l'élément gonflable (10) présente une ouverture d'évent (21), l'ouverture d'évent (21) étant agencée pour se fermer contre un des éléments structurels (2) durant le gonflage.

2. Dispositif de sécurité selon la revendication 1, où ledit élément gonflable (10) a une configuration de pré-accident dans laquelle il n'entre pas dans ledit espace (11).

3. Dispositif de sécurité selon la revendication 1 ou la revendication 2, où ledit élément gonflable (10) est configuré pour coupler lesdits éléments structurels (14) l'un à l'autre lorsqu'ils sont gonflés et pour empêcher une fermeture sensiblement complète de l'espace (11) entre eux dans le cas d'un accident.

4. Dispositif de sécurité selon l'une quelconque des revendications précédentes, où un desdits éléments structurels (2) est déplaçable afin de permettre l'accès à un espace intérieur du véhicule à moteur, et l'autre desdits éléments structurels (4) est fixe.

5. Dispositif de sécurité selon la revendication 4, où ledit élément gonflable (10) est monté sur l'élément fixe (4).

6. Dispositif de sécurité selon la revendication 4 ou la revendication 5, où ledit élément mobile est une porte (2), et ledit élément fixe est un pilier (4).

7. Dispositif de sécurité selon la revendication 4 ou la revendication 5, où ledit élément mobile (2) est un capot ou couvercle de coffre.

8. Dispositif de sécurité selon l'une quelconque des revendications 4 à 7, où ledit élément gonflable (10) est réalisé dans la région d'un verrouillage relâchable (6) entre l'élément mobile (2) et l'élément fixe (4).

9. Dispositif de sécurité selon l'une quelconque des revendications 4 à 8, où ledit élément gonflable (10) est réalisé dans la région d'une charnière (5) entre l'élément mobile (2) et l'élément fixe (4).

10. Dispositif de sécurité selon l'une quelconque des revendications précédentes, où ledit élément gonflable (10) prend la forme d'un coussinet de sécurité gonflable réalisé à partir d'un matériau déformable sensiblement élastiquement.

11. Dispositif de sécurité selon l'une quelconque des revendications 1 à 9, où ledit élément gonflable (10) est un coussin de sécurité gonflable réalisé en un matériau déformable sensiblement plastiquement.

12. Dispositif de sécurité selon l'une quelconque des revendications précédentes, où l'élément gonflable (10) a une capacité de gonflage comprise entre 50 cm³ et 200 cm³.

13. Dispositif de sécurité selon l'une quelconque des revendications précédentes, où l'élément gonflable (10) a une forme oblongue.

14. Dispositif de sécurité selon l'une quelconque des revendications précédentes, comprenant en outre un générateur de gaz pyrotechnique (19) réalisé en communication fluidique avec l'élément gonflable (10) pour le gonflage de celui-ci.
